# EUROPEAN PATENT SPECIFICATION

(11) **EP 0 867 797 B1**
(45) Date of publication and mention of the grant of the patent: **14.04.2004**
(21) Application number: 98302133.8
(22) Date of filing: 23.03.1998
(51) Int. Cl.: G06F 1/26

(54) **Computer with automatic power cut-off function and control method therefore**
Computer mit automatischer Abschaltsteuerung und Steuerverfahren dafür
Ordinateur avec coupure d'alimentation automatique et son procédé de commande

(30) Priority: 21.03.1997 KR 9709703
(43) Date of publication of application: 30.09.1998
(73) Proprietor: Samsung Electronics Co., Ltd., Suwon, Kyunggi-do (KR)
(72) Inventor: Yoon, Ji-Seob, Suwon, Kyunggi-do (KR); Lee, Kyung-Sang, Suwon, Kyunggi-do (KR); Kim, Hyun-Chul, Kangbuk-ku, Seoul (KR); Na, Seung-Ju, Suwon, Kyunggi-do (KR)
(74) Representative: Tunstall, Christopher Stephen

(56) References cited:
- CA-A- 2 092 119
- GB-A- 2 210 217
- "MacIntosh Reference Manual System 7" 1991 , APPLE COMPUTER, INC , CUPERTINO, CA XP002072442 * page 47 * * page 122 - page 123 *
- "IBM TECHNICAL DISCLOSURE BULLETIN" IBM TECHNICAL DISCLOSURE BULLETIN, vol. 38, no. 5, May 1995, page 11/12 XP000519478
- "SCREEN/PROGRAMMABLE POWER-ON/OFF SWITCH FOR PERSONAL COMPUTERS" IBM TECHNICAL DISCLOSURE BULLETIN, vol. 36, no. 1, 1 January 1993, pages 157-158, XP000333809

## Description

This invention is relates to power control of a computer system.

A typical computer may operate under the Microsoft Windows environment such as "Windows 95" which is an OS (Operating System). The Windows operating system controls the start-up and shut-down of the computer. In particular, the shut-down operation occurs when power is cut off. In that case, the system shut-down command of the Windows operating system is used to force the computer to store program information and data and then present the message "It is now safe to turn off your computer" on a monitor for a user.

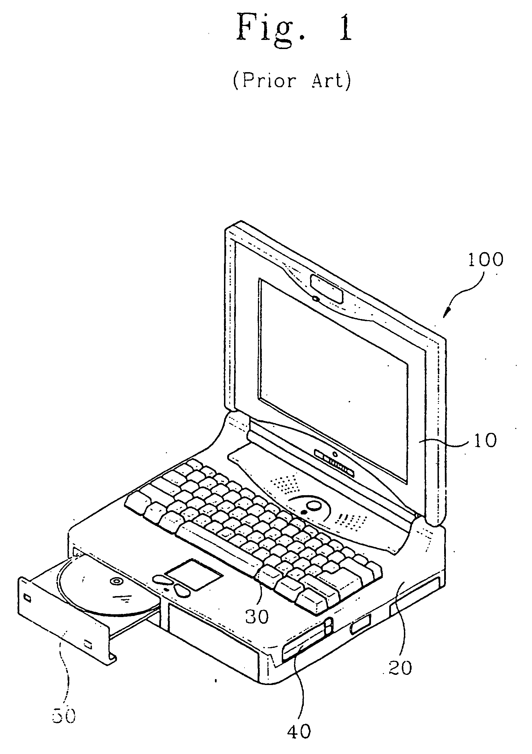

Referring to Fig. 1, a conventional notebook computer is shown in appearance. The computer is provided with a monitor 10 including a LCD panel, a main body 20, a keyboard 30, a FDD (floppy disk drive) and a CD-ROM drive 50. The notebook computer is operated under the Windows 95 system. The window 95 system stops the operation of the notebook computer as follows.

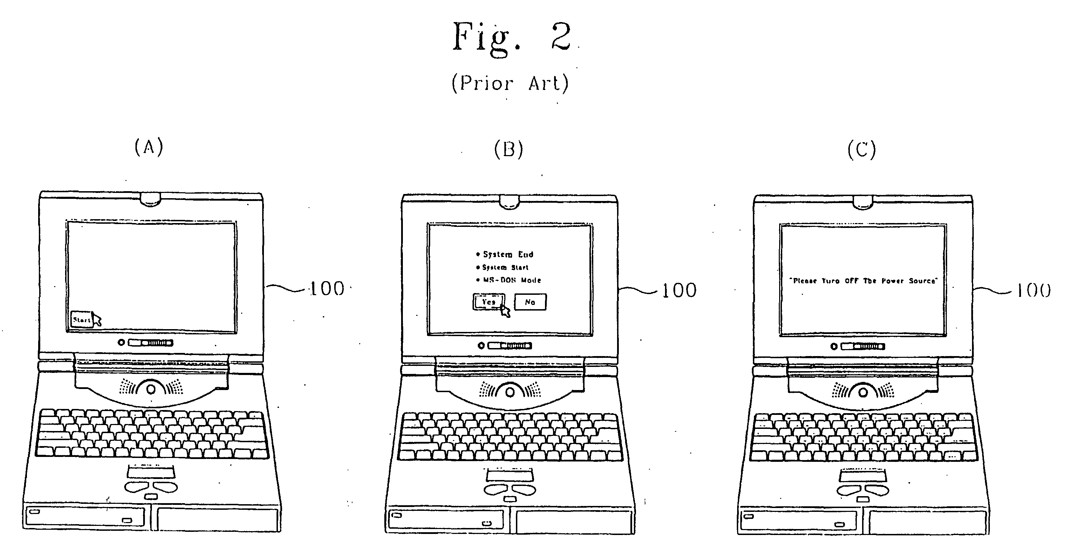

Referring to Fig. 2, when the end of the system operation is intended, the user clicks the button "START" and then selects the button "SHUT DOWN" on a submenu on a screen as shown in Fig. 2A. The computer represents selecting menus "SHUT DOWN THE COMPUTER", "RESTART THE COMPUTER", "RESTART THE COMPUTER IN MS-DOS MODE" on the screen as shown in Fig. 2B. When the computer is turned off, the user clicks the "SHUT DOWN THE COMPUTER" button and the "YES" button in turn. If confirmation of system shut-down is established, the message "IT IS NOW SAFE TO TURN OFF THE COMPUTER" is shown on the screen as shown in Fig. 2C. The computer is arranged to store information and data relating to the user's activities in a predetermined period of time before the final message is represented. This requires the user to wait. It also causes other inconvenience for users.

CA2092119 and GB2210217 disclose methods and apparatus for controlling the supply of power to a computer system.

It is an aim of the present invention to at least partly address the problems outlined above.

According to a first aspect of the present invention there is provided a computer having an automatic power cut-off function comprising:
a CPU for performing data processing functions of the computer; and
power control means for controlling the supply of power to the computer and cutting the supply of power to the computer under the control of the CPU; characterised in that the supply of power is cut-off prior to a step of storing data and information in a system memory.

Preferably, the power control means comprises:
first power control means for controlling the supply of power to the computer; and
second power control means for enabling the first power control means to cut the supply of power to the computer under the control of the CPU.

The second power control means may comprise a microprocessor. The second power control means may be adapted to generate a power cut-off signal.

Preferably, the CPU is adapted to control the power control means to cut the supply of power to the computer when the execution of a software program of the computer has been completed. The said software program is an operating system for the computer.

The computer may further comprise a BIOS portion for storing a program to control various input and output ports or devices of the computer.

Where the computer is a portable computer, the second power control means is preferably adapted to determine whether an adaptor is connected to the computer and, if so, to enable a charging mode of the computer battery when the supply of power to the computer is cut.

According to a second aspect of the present invention there is provided a control method for the CPU of a computer having an automatic power cut-off function comprising:
completing the execution of a software program of the computer; and
controlling a power control means of the computer to cut the supply of power to the computer; characterised by the step of cutting the supply of power prior to a step of storing data and information in a system memory.

The power control means may comprise:
first power control means for controlling the supply of power to the computer; and
second power control means for enabling the first power control means to cut the supply of power to the computer under the control of the CPU.

The second power control means may comprise a microprocessor. Preferably, the said microprocessor determines whether an adaptor is connected to the computer and, if so, enables a charging mode of the computer battery when the supply of power to the computer is cut.

The control method may include:
calling a system power cut-off service routine from a BIOS portion using an advanced power management function of the microprocessor;
determining whether the microprocessor is ready to perform a power cut-off command;
enabling the BIOS portion to write a power cut-off command to the microprocessor, if the microprocessor is determined to be ready; and
halting the BIOS portion whilst the microprocessor performs the power cut-off command.

The present invention will now be described by way of example with reference to the accompanying drawings in which:
FIG. 1 illustrates a conventional notebook computer;
FIGS. 2A, 2B and 2C illustrate the presentations of the Windows 95 system during system shut-down;
FIG. 3 illustrates the configuration of a computer having an automatic power cut-off function according to one embodiment of the invention;
FIG. 4 is flow chart of the power cut-off operation according to a power cut-off service routine stored in a BIOS portion;
FIG. 5 illustrates the functional blocks of a microprocessor;
FIG. 6 illustrates the hardware blocks of the microprocessor;
FIG. 7 is a detailed view of a power control portion of the computer;
FIG. 8 is a flow chart illustrating an automatic power cut-off method according to another embodiment of the invention; and
FIG. 9 is a detailed flow chart illustrating the power cut-off service routine of FIG. 8.

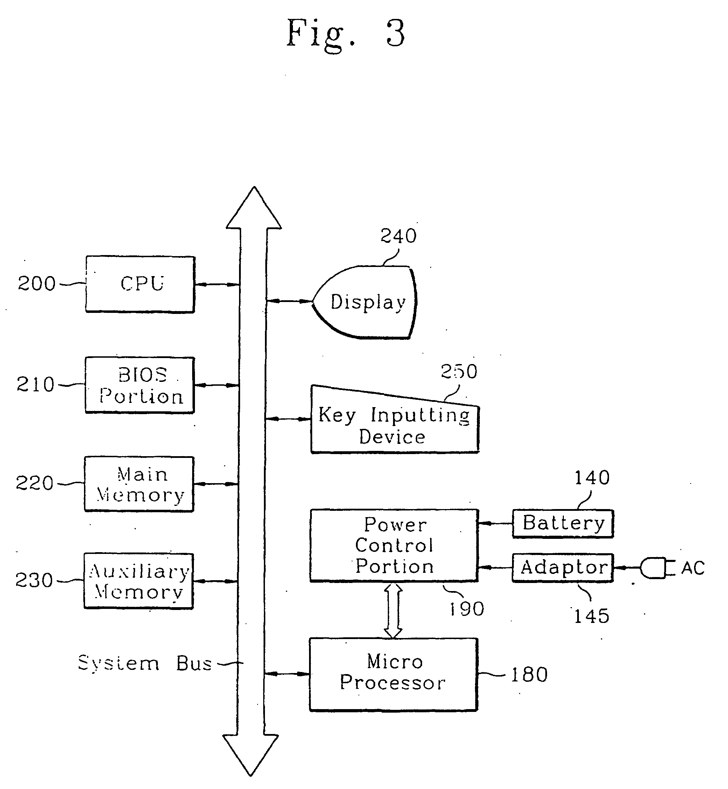

Referring to FIG. 3, a computer with an automatic power cut-off function comprises a BIOS 210, a CPU 200, a microprocessor 270 and a power control portion 260 to remove the waiting time which the operating system takes for the power cut-off and perform the power cut-off by itself.

The CPU performs the operational control functions of the computer according to a system program. A main memory 220 includes a RAM to store processed data temporality. An auxiliary memory 230 includes a hard disk drive or a CD-ROM drive to store a system program, data and other programs. A key inputting device includes a keyboard to input system commands, data and information. A display 250 includes a video card and a monitor to represent the operation and processing states of the computer. A BIOS portion 210 stores programs for various inputting/outputting operations of the computer and a processing program. A power control portion 260 cuts the power supply of the system from a battery 280 or an adapter 290 according to the control of a microprocessor 270 as described below in detail.

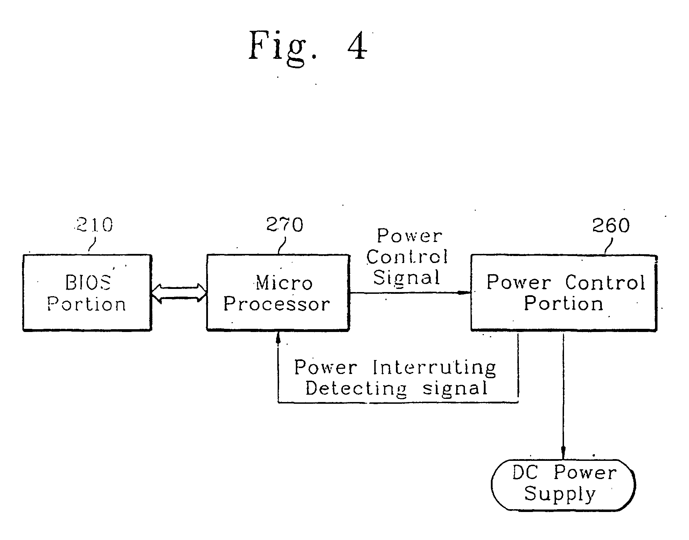

Referring to FIG. 4, according to a power cut-off service routine stored in the BIOS portion 210 the power cut-off operation will now be described. The system shut-down is accomplished by selecting the "SHUT DOWN" button. In other words, the operating system such as the Windows 95 performs the power cut-off command based on the advanced management function (APM). When the "SHUT DOWN" button is selected, the CPU 200 fetches the power cut-off routine from the BIOS portion 210 and performs the power cut-off command. The CPU 200 forces the BIOS portion 210 to apply a control signal of a power cut-off command to the microprocessor 270. The microprocessor 270 detects the control signal and applies a power cut-off signal to the power control portion 260. The power control portion 260 cuts the power supply from the battery 280 and the adaptor 290 to all power input ports of the system. Then, the microprocessor 270 detects a power cut-off signal to determine whether the system power is cut off. If the system power is not cut off, the microprocessor again controls the power control portion 260 to cut the power supply to the system.

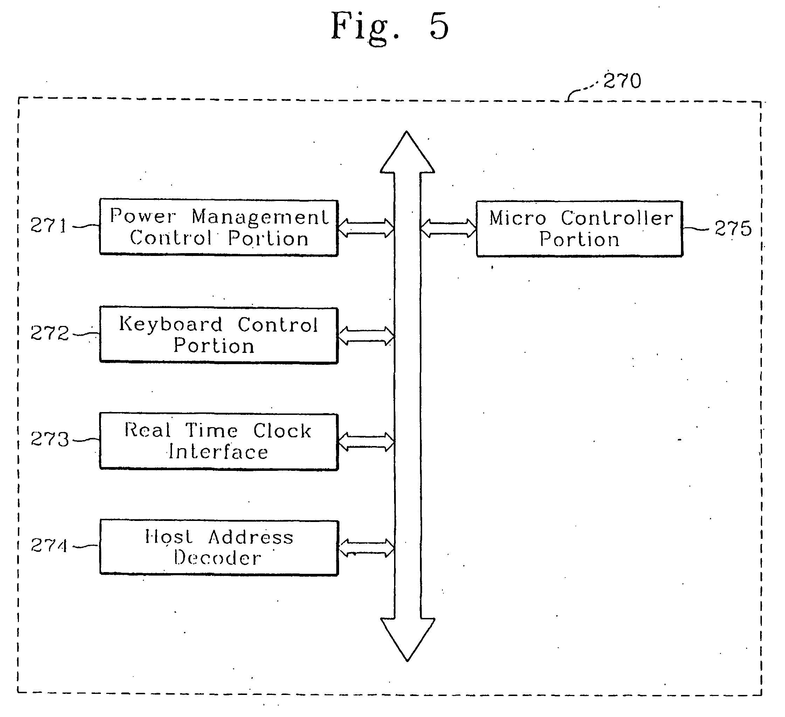

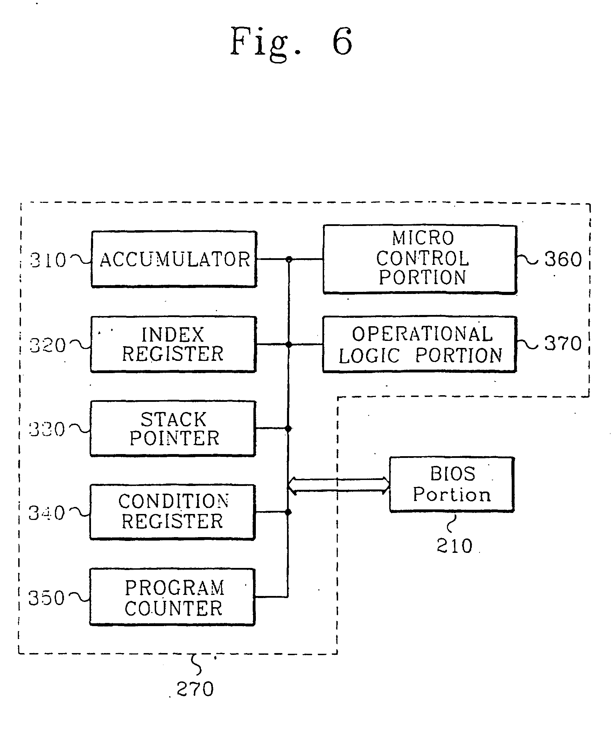

In FIGs. 5 and 6, the function and configuration of the microprocessor 270 are shown in detail. The microprocessor 270 has an advanced management function performed according to programs corresponding to a power management controller 271, a keyboard controller 272, a real time clock interface 273, a host address decoder 274 and a microcontroller unit 275, which are represented as functional blocks. The microprocessor 270 comprises an accumulator 310, an index register 320, a stack pointer 330, a condition code register 340, a program counter 350, a microcontroller 360 and an arithmetic logic unit 370, to perform the advanced management function. The CPU 200 calls a system power cut-off service routine from a BIOS portion using an advanced power management function of the microprocessor 270 upon the system ending. The CPU 200 determines whether the microprocessor 270 is ready to perform the power cut-off command. The CPU 200 forces the BIOS portion 210 to write the power cut-off command to the microprocessor 270, if the microprocessor 270 is ready. The microprocessor 270 forces the BIOS portion to be halted during operation of the power cut-off command. The microprocessor cuts the power source to the system. The microprocessor 270 may be a readily available commercial model, such as a "CPU 6805", well-known in this field.

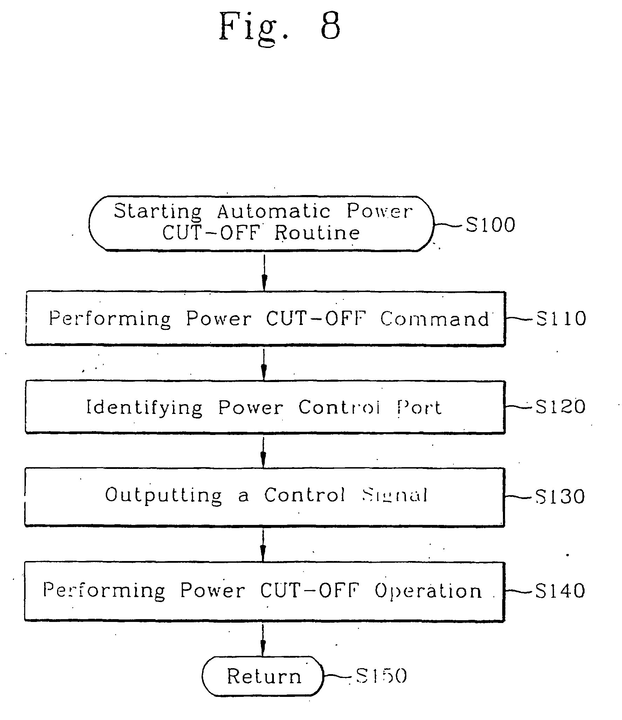

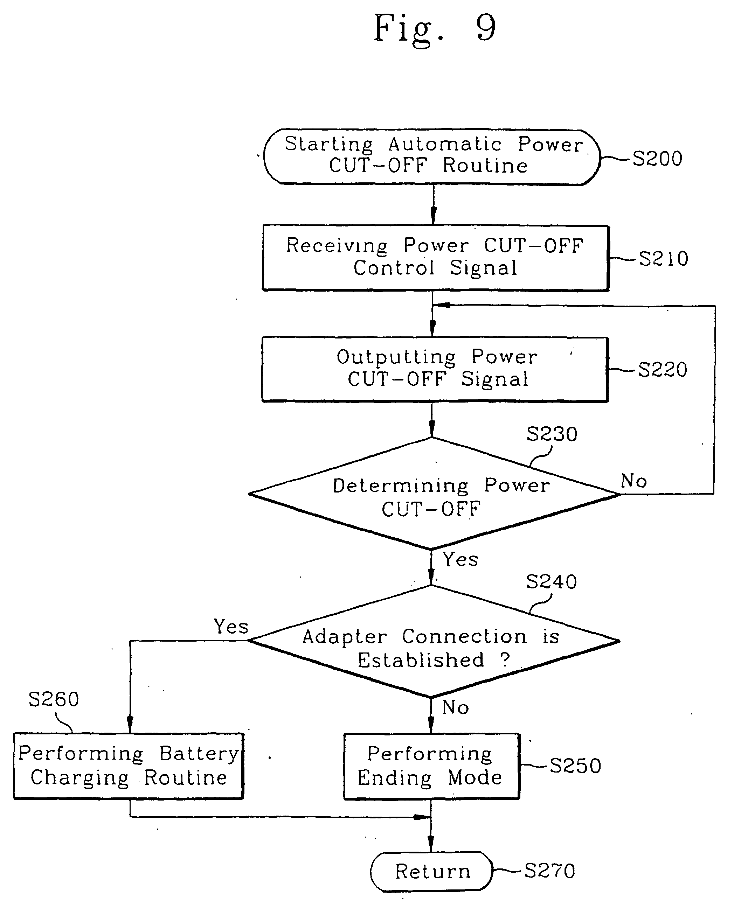

An automatic power cut-off method is illustrated in detail in FIGs. 8 and 9. The automatic power cut-off method comprises a power cut-off command discriminating step S110, a power control port identifying step S120, a power cut-off control signal outputting step S130 and a power cutting-off step S140.

First, when the power cut-off function is selected by a command or an application program, the operating system performs the advanced power management function (step S110). The advanced power management function is started by calling a predetermined interrupt service routine from the BIOS portion 210. In the interrupt service routine, the CPU 200 checks the input/output ports of the microprocessor 270 to control the turning on/off of the power source. At that time, it is determined whether the microprocessor 270 is set to a waiting mode in which it does not perform data transmitting/receiving functions or control functions (step S120). If the microprocessor 270 is in a waiting mode, the CPU 200 outputs a power cut-off command signal to the microprocessor 270 (step S130). The microprocessor 270 detects the power cut-off command signal to perform the power cut-off operation (step 140).

Next, when the microprocessor 270 receives the power cut-off command signal (step 210), the microprocessor 270 outputs the power cut-off signal, for example a low level signal, to the power control port (PWR-CLR) of a power control portion 260 (step S22). Then, the microprocessor 270 scans the power output port of the power control portion 260 to confirm the power cut-off operation (step S230). At that time, if the power output port is at a low level, for example 0V, it is determined that the power source is turned off. On the other hand, if the power output port is at a high level, for example 5V, it is determined that the power source is turned on. If the power source is turned on at step S230, the microprocessor 270 again applies the power cut-off control signal to the power control port PWR-CLR.

When it is determined that the power source is turned off, the microprocessor 270 determines whether an adaptor 290 is connected to the power control portion 260 (step S240). If the adaptor 290 is connected to the power control portion 260, the microprocessor 270 enables the charging mode to cause the battery 290 to be charged (S260). If the adaptor 290 is not connected to the power control portion 260, the microprocessor 270 maintains the system shut-down mode (step S250) to reduce the amount of a power consumed.

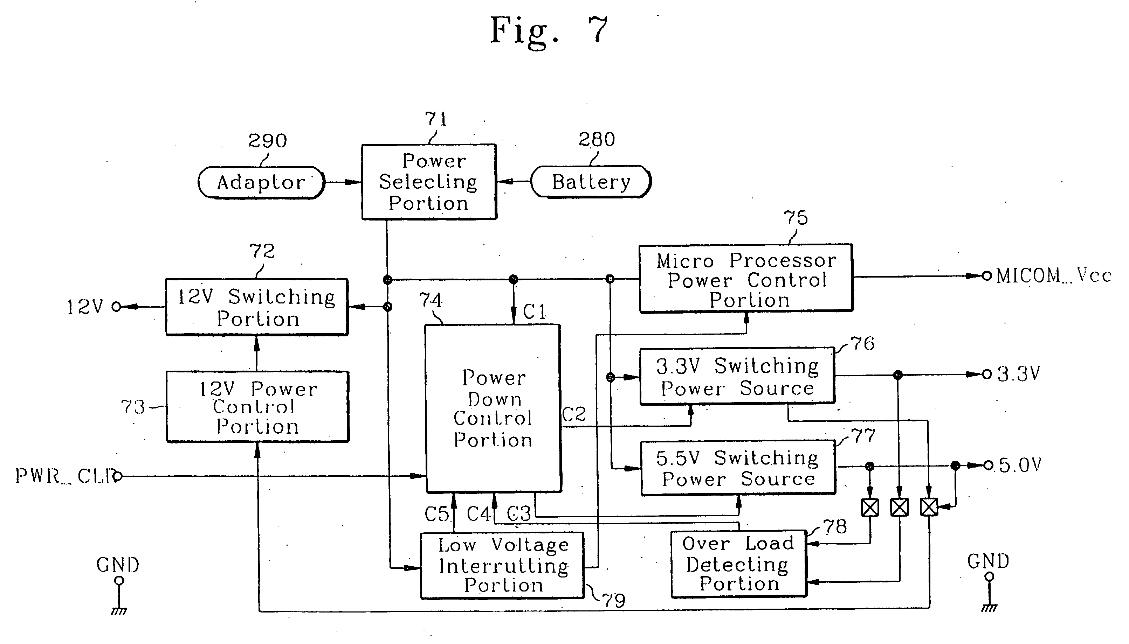

Referring to FIG. 7, the power control portion 260 is shown in detail. The power control portion 260 comprises a power selecting portion 71, a 12V switching portion 72, a 12V power control portion, a power down control portion 74 having a control port PWR-CLR, a microprocessor power control portion 75, a 3.3V switching power source 76, a 5V switching power source 77, an overload detecting portion 78 and a low voltage interrupting portion 79.

The power selecting portion 71 selects a power voltage from the adaptor 290 or the battery 280. According to the selection of a voltage, the 3.3V switching power source 76 and the 5V switching power source 77 output 3.3V and 5V to corresponding system loads. The 12V switching portion 72 is enabled by means of the 12V power control portion 73 to apply a 12 voltage to corresponding system loads. The microprocessor power control portion 75 supplies the power voltage Vcc to the microprocessor 270. The low voltage interrupting portion 79 applies a control signal to the power down control portion 74 to interrupt the voltage supply to system loads, when the voltage selected by the power selecting portion 71 is below a predetermined level.

The overload detecting portion 78 determines whether the power sources of the 3.3V switching power source 76 and the 5V switching power source 77 are overloaded. If the power sources become overloaded, the overload interrupting portion 79 applies a control signal of the power cut-off control signal to a control port C5 of the power down control portion 74. At that time, the power down control portion 74 controls the 3.3V switching power source 76 and the 5V switching power source 77 to cut the power supply to system loads.

In the normal operation mode, when the power down control portion 74 receives a control signal of a high level through the control port PWR-CLR, the power control portion 74 controls the 3.3V switching power source 76 and the 5V switching power source 77.

According to the principles of the present invention, when the power down control portion 74 receives a control signal of a low level through the control port PWR-CLR from the microprocessor 279 at the power cut-off mode, the power control portion 74 controls the 3.3V switching power source 76 and the 5V switching power source 77 to deplete or cut the power source to the system. Therefore, all power sources 3.3V, 5.0V and 12V supplied to the system are interrupted. But even through the power sources are turned off, the power source is supplied by means of the microprocessor power control portion 75 to the microprocessor 270, to perform the predetermined functions of memorizing data and system programs storage.

Accordingly, the invention further comprises a power cut-off control portion including a system power cut-off service routine in a BIOS portion and an advanced power management function portion in a microprocessor, so that the operation of the power cut-off is accomplished without a waiting time taken in storing data and information in a system memory during the power cutting off of the operating system.

## Claims

1. A computer having an automatic power cut-off function comprising:
a CPU (200) for performing data processing functions of the computer; and
power control means for controlling the supply of power to the computer and cutting the supply of power to the computer under the control of the CPU (200);
**characterised in that** the supply of power is cut-off prior to a step of storing data and information in a system memory.

2. A computer according to claim 1 in which the power control means comprises:
first power control means for controlling the supply of power to the computer; and
second power control means for enabling the first power control means to cut the supply of power to the computer under the control of the CPU (200).

3. A computer according to claim 2 in which the second power control means comprises a microprocessor (270).

4. A computer according to claim 2 or claim 3 in which the second power control means is adapted to generate a power cut-off signal.

5. A computer according to any preceding claim in which the CPU (200) is adapted to control the power control means to cut the supply of power to the computer when the execution of a software program of the computer has been completed.

6. A computer according to claim 5 in which the said software program is an operating system for the computer.

7. A computer according to any preceding claim further comprising a BIOS portion (210) for storing a program to control various input and output ports or devices of the computer.

8. A computer according to any preceding claim which is a portable computer and in which the second power control means is adapted to determine whether an adaptor is connected to the computer and, if so, to enable a charging mode of the computer battery when the supply of power to the computer is cut.

9. A control method for the CPU (200) of a computer having an automatic power cut-off function comprising:
completing the execution of a software program of the computer; and
controlling a power control means of the computer to cut the supply of power to the computer; **characterised by** the step of cutting the supply of power prior to a step of storing data and information in a system memory.

10. A control method according to claim 9 in which the power control means comprises:
first power control means for controlling the supply of power to the computer; and
second power control means for enabling the first power control means to cut the supply of power to the computer under the control of the CPU (200)

11. A control method according to claim 10 in which the second power control means comprises a microprocessor (270).

12. A control method according to claim 11 in which the said microprocessor (270) determines whether an adaptor is connected to the computer and, if so, enables a charging mode of the computer battery when the supply of power to the computer is cut.

13. A control method according to claim 11 or claim 12 comprising:
calling a system power cut-off service routine from a BIOS portion (210) using an advanced power management function of the microprocessor;
determining whether the microprocessor (270) is ready to perform a power cut-off command;
enabling the BIOS portion to write a power cut-off command to the microprocessor, if the microprocessor is determined to be ready; and
halting the BIOS portion whilst the microprocessor performs the power cut-off command.

## Patentansprüche

1. Computer mit automatischer Stromabschaltfunktion, der Folgendes umfasst:
eine CPU (200) zum Ausführen von Datenverarbeitungsfunktionen des Computers; und
einen Stromregler zum Steuern der Stromversorgung zu dem Computer und zum Abschalten der Zufuhr von Strom zu dem Computer gemäß Steuerung durch die CPU (200), **dadurch gekennzeichnet, dass** die Zufuhr von Strom vor einem Schritt des Speicherns von Daten und Informationen in einem Systemspeicher abgeschaltet wird.

2. Computer nach Anspruch 1, bei dem der Stromregler Folgendes umfasst:
einen ersten Stromregler zum Steuern der Zufuhr von Strom zu dem Computer; und
einen zweiten Stromregler, der es ermöglichen soll, dass der erste Stromregler die Zufuhr von Strom zum Computer gemäß Steuerung durch die CPU (200) abschaltet.

3. Computer nach Anspruch 2, bei dem der zweite Stromregler einen Mikroprozessor (270) umfasst.

4. Computer nach Anspruch 2 oder Anspruch 3, bei dem der zweite Stromregler die Aufgabe hat, ein Stromabschaltsignal zu erzeugen.

5. Computer nach einem der vorherigen Ansprüche, bei dem die CPU (200) die Aufgabe hat, den Stromregler so zu steuern, dass er die Zufuhr von Strom zum Computer abschaltet, wenn ein Softwareprogramm des Computers fertig abgearbeitet ist.

6. Computer nach Anspruch 5, bei dem das genannte Softwareprogramm ein Betriebssystem für den Computer ist.

7. Computer nach einem der vorherigen Ansprüche, ferner umfassend einen BIOS-Teil (210) zum Speichern eines Programms zum Steuern verschiedener Ein- und Ausgabeports oder Bauelemente des Computers.

8. Computer nach einem der vorherigen Ansprüche, der ein tragbarer Computer ist und bei dem der zweite Stromregler die Aufgabe hat zu ermitteln, ob ein Adapter am Computer angeschlossen ist, und wenn ja, einen Lademodus der Computerbatterie zu aktivieren, wenn die Zufuhr von Strom zum Computer unterbrochen ist.

9. Steuerverfahren für die CPU (200) eines Computers mit einer automatischen Stromabschaltfunktion, wobei das Verfahren die folgenden Schritte umfasst:
Vollenden der Ausführung eines Softwareprogramms des Computers; und
Steuern eines Stromreglers des Computers zum Abschalten der Zufuhr von Strom zum Computer; **gekennzeichnet durch** den Schritt des Abschaltens der Zufuhr von Strom vor einem Schritt des Speicherns von Daten und Informationen in einem Systemspeicher.

10. Steuerverfahren nach Anspruch 9, bei dem der Stromregler Folgendes umfasst:
einen ersten Stromregler zum Steuern der Zufuhr von Strom zum Computer; und
einen zweiten Stromregler, um es zu ermöglichen, dass der erste Stromregler die Zufuhr von Strom zum Computer gemäß Steuerung durch die CPU (200) abschaltet.

11. Steuerverfahren nach Anspruch 10, bei dem der zweite Stromregler einen Mikroprozessor (270) umfasst.

12. Steuerverfahren nach Anspruch 11, bei dem der genannte Mikroprozessor (270) ermittelt, ob ein Adapter am Computer angeschlossen ist, und wenn ja, einen Lademodus der Computerbatterie aktiviert, wenn die Zufuhr von Strom zum Computer unterbrochen ist.

13. Steuerverfahren nach Anspruch 11 oder Anspruch 12, das Folgendes umfasst:
Abrufen einer Systemstromabschalt-Serviceroutine von einem BIOS-Teil (210) unter Anwendung einer fortschrittlichen Strommanagementfunktion des Mikroprozessors;
Ermitteln, ob der Mikroprozessor (270) bereit ist, einen Stromabschaltbefehl auszuführen;
Aktivieren des BIOS-Teils zum Schreiben eines Stromabschaltbefehls auf den Mikroprozessor, wenn der Mikroprozessor als bereit ermittelt wurde; und
Halten des BIOS-Teils, während der Mikroprozessor den Stromabschaltbefehl ausführt.

## Revendications

1. Ordinateur ayant une fonction de coupure automatique d'alimentation comprenant :
une UCT (200) pour effectuer les fonctions de traitement de données de l'ordinateur ; et
un moyen de commande d'alimentation pour commander l'alimentation de courant à l'ordinateur et couper l'alimentation de courant à l'ordinateur sous le contrôle de l'UCT (200) ; **caractérisé en ce que** l'alimentation de courant est coupée avant une étape de mémorisation des données et des informations dans une mémoire du système.

2. Ordinateur selon la revendication 1 dans lequel le moyen de commande comprend :
un premier moyen de commande d'alimentation pour commander l'alimentation de courant à l'ordinateur ; et
un deuxième moyen de commande d'alimentation pour permettre au premier moyen d'alimentation de couper l'alimentation de courant à l'ordinateur sous le contrôle de l'UCT (200).

3. Ordinateur selon la revendication 2 dans lequel le deuxième moyen de commande d'alimentation comprend un microprocesseur (270).

4. Ordinateur selon la revendication 2 ou 3 dans lequel le deuxième moyen de commande d'alimentation est adapté de façon à produire un signal de coupure d'alimentation.

5. Ordinateur selon l'une quelconque des revendications précédentes dans lequel l'UCT (200) est adaptée de façon à commander le moyen de commande d'alimentation pour couper l'alimentation de courant à l'ordinateur lorsque l'exécution d'un programme de logiciel de l'ordinateur a été achevée.

6. Ordinateur selon la revendication 5 dans lequel ledit programme de logiciel est un système d'exploitation pour l'ordinateur.

7. Ordinateur selon l'une quelconque des revendications précédentes comprenant également une portion BIOS (210) pour mémoriser un programme pour commander divers ports ou unités d'entrée et de sortie de l'ordinateur.

8. Ordinateur selon l'une quelconque des revendications précédentes qui est un ordinateur portable et dans lequel le deuxième moyen de commande d'alimentation est adapté pour déterminer si un adaptateur est connecté à l'ordinateur et, si c'est le cas, pour activer un mode de charge de la pile de l'ordinateur lorsque l'alimentation de courant à l'ordinateur est coupée.

9. Méthode de commande pour l'UCT (200) d'un ordinateur ayant une fonction de coupure automatique de l'alimentation comprenant :
l'achèvement de l'exécution d'un programme de logiciel de l'ordinateur ; et
la commande d'un moyen de commande d'alimentation de l'ordinateur pour couper l'alimentation de courant à l'ordinateur ; **caractérisée par** l'étape de coupure de l'alimentation de courant avant une étape de mémorisation des données et des informations dans une mémoire du système.

10. Méthode de commande selon la revendication 9 dans laquelle le moyen de commande d'alimentation comprend :
un premier moyen de commande d'alimentation pour commander l'alimentation de courant à l'ordinateur ; et
un deuxième moyen de commande d'alimentation pour permettre au premier moyen de commande d'alimentation de couper l'alimentation de courant à l'ordinateur sous le contrôle de l'UCT (200).

11. Méthode de commande selon la revendication 10 dans laquelle le deuxième moyen de commande d'alimentation comprend un microprocesseur (270).

12. Méthode de commande selon la revendication 11 dans laquelle ledit microprocesseur (270) détermine si un adaptateur est connecté à l'ordinateur et, si c'est le cas, active un mode de charge de la pile de l'ordinateur lorsque l'alimentation de courant à l'ordinateur est coupée.

13. Méthode de commande selon la revendication 11 ou la revendication 12 comprenant les étapes suivantes :
appeler une routine de service de coupure d'alimentation du système à partir d'une portion BIOS (210) en utilisant une fonction avancée de gestion d'énergie du microprocesseur :
déterminer si le microprocesseur (270) est prêt à effectuer une commande de coupure de l'alimentation ;
permettre à la portion BIOS d'envoyer une commande de coupure d'alimentation au microprocesseur, si le microprocesseur est déterminé à être prêt ; et
arrêter la portion BIOS tandis que le microprocesseur exécute la commande de coupure de l'alimentation.
